# EUROPEAN PATENT APPLICATION

(11) **EP 3 385 213 A1**
(43) Date of publication of application: **10.10.2018**
(21) Application number: 15910295.3
(22) Date of filing: 08.12.2015
(51) Int. Cl.: B66F 9/075, B66F 9/20, B66F 9/22

(54) **FORKLIFT**

(71) Applicant: Doosan Corporation, Seoul 04563 (KR)
(72) Inventor: NA, Ki Eop, Cheongju-si Chungcheongbuk-do 28338 (KR)
(74) Representative: Isarpatent
(86) International application number: PCT/KR2015/013392
(87) International publication number: WO 2017/099269

(57) **Abstract**

A forklift according to an exemplary embodiment of the present invention is capable of measuring weight of a cargo that is to be transported by the forklift. The forklift according to the exemplary embodiment of the present invention measures weight of a cargo by a displacement according to compression by tensile force applied to the chain 50 in a portion, in which the chain 50 is installed in a top frame 14.

## Description

### FORKLIFT

### [Technical Field]

The present invention relates to a forklift, and more particularly, to a forklift, which is capable of measuring weight of a cargo that is to be transported by the forklift.

### [Background Art]

In general, a forklift is used for transporting a cargo. Further, the forklift has a limit of transportable weight of a cargo. When the larger weight of cargo than weight allowance is loaded on a forklift, there is a risk of a safety accident.

Accordingly, the recognition of weight of a cargo applied to a forklift is very important for preventing a safety accident, and there is a case where it is necessary to measure and record weight of a cargo according to a working environment.

In the related art, when a cargo is loaded on a forklift, pressure of working oil is formed in a lift cylinder, and the pressure of the working oil is measured and the pressure of the working oil is converted to weight to recognize weight of the cargo.

However, the method of converting the pressure of the working oil to weight, which is described above, has a problem in that response is slow and reliability has an error of around 5%.

### [Related Art Literature]

(Patent Document 1) Korean Utility Model Application Laid-Open No. 20-0344391 (published on March 11, 2004)

### [Disclosure]

### [Technical Problem]

A technical object to be achieved by the present invention is to provide a forklift, which is capable of more rapidly and accurately recognizing weight of a cargo when the cargo is loaded on the forklift.

The technical object aimed to be achieved by the present invention is not limited to the foregoing technical object, and other non-mentioned technical objects may be clearly understood by those skilled in the art from the description below.

### [Technical Solution]

In order to achieve the technical object, a forklift according to an exemplary embodiment of the present invention includes: a base frame 10; a mast frame 12 which is disposed in the base frame 10 in a vertical direction; a top frame 14 which is disposed at an upper side of the mast frame 12; a moving frame 20 which moves up and down in the mast frame 12; a guide pulley 22 provided in the moving frame 20; an actuator 30 which is installed in the base frame 10 and operates the moving frame 20 to move up and down; a carriage unit 40 which moves up and down in the mast frame 12; a chain 50 of which one side is installed in the top frame 14 and the other side is installed in the carriage unit 40 via the guide pulley 22; and a weight measuring unit 100 which is compressed by tensile force applied to the chain 50 in a portion, in which the chain 50 is installed in the top frame 14, and measures weight of a cargo by compression force.

Further, in the forklift according to the exemplary embodiment of the present invention, the weight measuring unit 100 may include: a supporter frame 16 which is formed in the top frame 14 with a hole 18 in a vertical direction; a shaft 102 of which one side is connected to the chain 50 and the other side passes through the hole 18; a rod cell 106 which is installed to be penetrated by the shaft 102, which passes through the hole 18 of the supporter frame 16; and a nut 110 which is fastened to the shaft 102, which passes through the rod cell 106, to make tensile stress applied to the chain 50 act as pressure to the rod cell 106.

Further, the forklift according to the exemplary embodiment of the present invention may further include first and second columns 104 and 108 which are provided in the shaft 102 so as to be disposed at an upper side and a lower side of the rod cell 106, respectively.

Other specific matters of the exemplary embodiment are included in the detailed description and the drawings.

### [Advantageous Effects]

In the forklift according to the exemplary embodiment of the present invention, weight of a cargo is directly applied to a chain and the load applied to the chain is directly measured, so that it is possible to measure weight of the cargo within a remarkably short time compared to the related art, in which weight of a cargo is measured by measuring hydraulic pressure of a lift cylinder.

Further, the forklift according to the exemplary embodiment of the present invention measures a load directly applied to the chain, so that it is possible to remarkably improve reliability compared to the related art, in which hydraulic pressure of a lift cylinder is measured.

Further, in the forklift according to the exemplary embodiment of the present invention, the weight measuring unit is disposed in an upper portion of the mast to maximally avoid interference with a cargo or other things, so that it is possible to maximally prevent the weight measuring unit from being damaged.

### [Description of Drawings]

FIGS. 1 and 2 are diagrams for describing a forklift according to an exemplary embodiment of the present invention.
FIG. 3 is a diagram for describing a weight measuring unit in a forklift according to the exemplary embodiment of the present invention.

### [Best Mode]

The advantages and characteristics of the present invention, and a method for achieving the advantages and characteristics will become clear by referring to the exemplary embodiment, which is described in detail, together with the accompanying drawings.

Hereinafter, an exemplary embodiment of the present invention will be described in detail with reference to the accompanying drawings. The exemplary embodiment described below is illustrative for helping understanding of the present invention, and it shall be understood that and the present invention may be variously modified and carried out differently from the exemplary embodiment described herein. However, in the description of the present invention, when a detailed description of a related publicly known function or constituent element is determined to unnecessarily make the subject matter of the present invention unclear, the detailed description and a detailed illustration thereof will be omitted. Further, for helping the understanding of the invention, the accompanying drawings are not illustrated according to an actual scale, but sizes of some of the constituent elements may be exaggerated and illustrated.

In the meantime, terms described below are terms set in consideration of a function in the present invention, and may be changed according to an intension of a producer or a usual practice, so that the definitions thereof should be made based on the entire contents of the present specification.

Throughout the specification, the same reference numeral denotes the same constituent element.

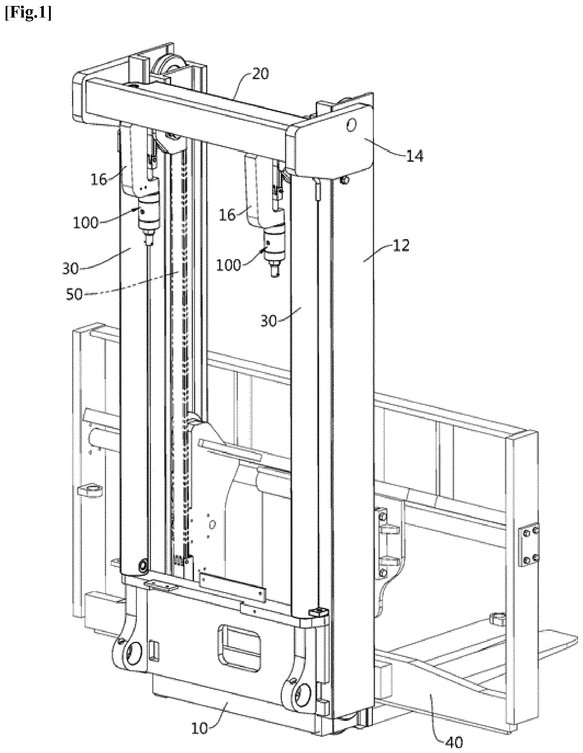

Hereinafter, a forklift according to an exemplary embodiment of the present invention will be described with reference to FIGS. 1 to 3.

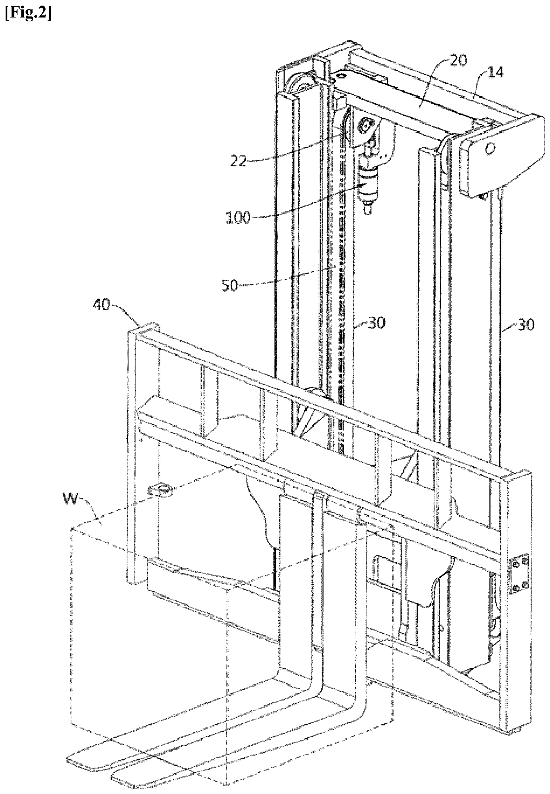

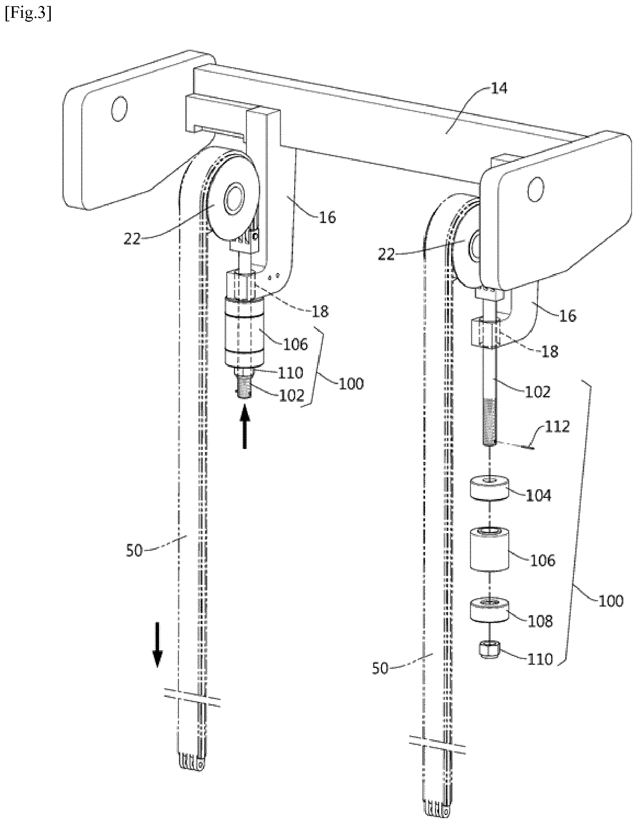

FIGS. 1 and 2 are diagrams for describing a forklift according to an exemplary embodiment of the present invention. FIG. 3 is a diagram for describing a weight measuring unit in a forklift according to the exemplary embodiment of the present invention.

The forklift is provided with a base frame 10, and a mast frame 12 is provided in the frame 10 in a vertical direction. Further, a top frame 14 is disposed at an upper side of the mast frame 12, and a carriage unit 40 is provided in a front direction of the mast frame 12.

Further, a moving frame 20 is provided inside the mast frame 12 to be movable up and down, and a guide pulley 22 is provided in the moving frame 20.

Further, an actuator 30 is installed in the base frame 10, and the moving frame 20 is connected to a rod of the actuator 30.

In the meantime, one side of a chain 50 is installed in the top frame 14, and the other side of the chain 50 is installed in the carriage unit 40 via the guide pulley 22.

That is, the moving frame 20 moves up and down by an operation of the actuator 30, and the carriage unit 40 moves up and down by the moving up and down operation of the moving frame 20. In addition, the chain 50 tows the carriage unit 40 when the moving frame 20 moves up to raise the carriage unit 40. In contrast, the chain 50 moves down the carriage unit 40 by weight of the carriage unit 40 when the moving frame 20 moves down.

In the forklift according to the exemplary embodiment of the present invention, a weight measuring unit 100 is provided in a portion, in which the chain 50 is installed in the top frame 14. The weight measuring unit 100 is compressed by tensile force applied to the chain 50 and measures weight of a cargo W by a displacement changed during the compression.

Accordingly, the forklift according to the exemplary embodiment of the present invention converts the tensile force applied to the chain 50 to compression force and converts the compression force to weight, and it is possible to measure weight of the cargo W within a remarkably short time compared to the related art, in which weight of a cargo is measured by measuring hydraulic pressure of a lift cylinder.

Further, the forklift according to the exemplary embodiment of the present invention measures a load directly applied to the chain 50, so that it is possible to remarkably improve reliability compared to the related art, in which hydraulic pressure of a lift cylinder is measured.

Further, in the forklift according to the exemplary embodiment of the present invention, the weight measuring unit 100 is disposed in an upper portion of the mast to maximally avoid interference with the cargo W or other things, so that it is possible to maximally prevent the weight measuring unit 100 from being damaged.

In the meantime, in the forklift according to the exemplary embodiment of the present invention, the weight measuring unit 100 may be installed in a support frame 16, which is formed in the top frame 14, as illustrated in FIG. 3.

The supporter frame 16 may be formed in the top frame 14, and a hole 18 may be formed in the supporter frame 16 in a vertical direction.

A shaft 102 is connected to the chain 50. The shaft 102 is installed in the supporter frame 16 so as to pass through the hole 18. That is, the chain 50 passes through the guide pulley 22, so that both end portions of the chain 50 head in a down direction.

A rod cell 106 is installed to be penetrated by the shaft 102, which passes through the hole 18 of the supporter frame 16.

Further, a nut 110 is fastened to the shaft 102 which passes through the rod cell 106. The tensile force applied to the chain 50 is applied in a direction of moving up the shaft 102 and the nut 110 is fastened to the shaft 102 and thus force is applied in a direction of moving up the nut 110 to finally compress the rod cell 106. That is, the rod cell 106 is operated by the tensile force applied to the chain 50 as compression stress.

In the meantime, the rod cell 106 may have reliably lower durability than that of other constituent elements. That is, there is a probability that the rod cell 106 is damaged by the tensile force applied to the chain 50. However, the forklift according to the exemplary embodiment of the present invention has the configuration that even when the rod cell 106 is damaged, the chain 50 is not unwound, so that it is possible to more safely use the forklift.

In addition, even when the rod cell 106 is damaged and separated due to an unexpected problem, the nut 110 is prevented from passing through the supporter frame 16, so that the chain 50 is not loosened, thereby preventing an accident in which the cargo W is fallen.

On the other hand, the forklift according to the exemplary embodiment of the present invention may include first and second columns 104 and 108 at an upper side and a lower side of the rod cell 106, respectively. The first and second columns 104 and 108 may have a configuration of being inserted into the shaft 102.

Accordingly, in the forklift according to the exemplary embodiment of the present invention, tensile force applied to the chain 50 is applied to the rod cell 106 through the nut 110 as compression force, and in this case, the first column 104 helps the supporter frame 16 and the rod cell 106 to avoid direct friction to prevent the rod cell 106 from being damaged.

Further, in the forklift according to the exemplary embodiment of the present invention, tensile force applied to the chain 50 is applied to the rod cell 106 through the nut 110 as compression force, and in this case, the second column 108 increases a contact area between the nut 110 and the rod cell 106, so that it is possible to prevent compression force from being concentrated to a specific portion of the rod cell 106 and distribute the compression force. That is, the compression force of an end portion of the rod cell 106 is distributed, thereby preventing the rod cell 106 from being damaged.

On the other hand, a pin 112 may be further provided in an end portion of the shaft 102. The pin 112 prevents the nut 110 from being arbitrarily loosened and separated.

The exemplary embodiments of the present invention have been described with reference to the accompanying drawings, but those skilled in the art may understand that the present invention may be carried out in another specific form without changing the technical spirit or an essential feature thereof.

Accordingly, it will be understood that the aforementioned exemplary embodiments are described for illustrative and are not limited, and the scope of the present invention shall be represented by the claims to be described below, and all of the changes or modified forms induced from the meaning and the scope of the claims, and an equivalent concept thereof are included in the scope of the present invention.

### [Industrial Availability]

The forklift according to the exemplary embodiment of the present invention is usable for measuring a load applied to a fork.

### <Description of Main Reference Numerals of Drawings>

| | |
|---|---|
| 10: Based frame | 12: Mast frame |
| 14: Top frame | 16: Supporter frame |
| 18: Hole | 20: Moving frame |
| 22: Guide pulley | 30: Actuator |
| 40: Carriage unit | 50: Chain |
| 100: Weight measuring unit | 102: Shaft |
| 104: First column | 106: Rod cell |
| 108: Second column | 110: Nut |
| 112: Pin | |

## Claims

1. A forklift, comprising:
a base frame (10);
a mast frame (12) which is disposed in the base frame (10) in a vertical direction;
a top frame (14) which is disposed at an upper side of the mast frame (12);
a moving frame (20) which moves up and down in the mast frame (12);
a guide pulley (22) provided in the moving frame (20);
an actuator (30) which is installed in the base frame (10) and operates the moving frame (20) to move up and down;
a carriage unit (40) which moves up and down in the mast frame (12);
a chain (50) of which one side is installed in the top frame (14) and the other side is installed in the carriage unit (40) via the guide pulley (22); and
a weight measuring unit (100) which is compressed by tensile force applied to the chain (50) in a portion, in which the chain (50) is installed in the top frame (14), and measures weight of a cargo by a displacement according to the compression.

2. The forklift of claim 1, wherein the weight measuring unit (100) includes:
a supporter frame (16) which is formed in the top frame (14) with a hole (18) in a vertical direction;
a shaft (102) of which one side is connected to the chain (50) and the other side passes through the hole (18);
a rod cell (106) which is installed to be penetrated by the shaft (102), which passes through the hole (18) of the supporter frame (16); and
a nut (110) which is fastened to the shaft (102), which passes through the rod cell (106), to make tensile stress applied to the chain (50) act as pressure to the rod cell (106).

3. The forklift of claim 2, further comprising:
first and second columns (104 and 108) which are provided in the shaft (102) so as to be disposed at an upper side and a lower side of the rod cell (106), respectively.
